# FASCICULE DE BREVET EUROPEEN

(11) **EP 0 799 542 B1**
(45) Date de publication et mention de la délivrance du brevet: **02.11.2000**
(21) Numéro de dépôt: 95942238.7
(22) Date de dépôt: 11.12.1995
(51) Int. Cl.: H04M 1/57

(54) **ENREGISTREUR ELECTRONIQUE AUTONOME DE SONNERIES DE TELEPHONE, AVEC PROCEDE ELIMINANT TOUTE ERREUR**
TELEFON-RUFSIGNAL-AUFZEICHNUNGSGERÄT UND VERFAHREN ZUR VERMEIDUNG DER FEHLER
SELF-CONTAINED ELECTRONIC TELEPHONE RING RECORDER AND METHOD FOR ELIMINATING ERRORS

(30) Priorité: 13.12.1994 FR 9414985
(43) Date de publication de la demande: 08.10.1997
(73) Titulaire: DZIULKO, Adolphe Richard, F-94170 Le Perreux (FR); Dziulko, André, 75012 Paris (FR)
(72) Inventeur: DZIULKO, Adolphe Richard, F-94170 Le Perreux (FR); Dziulko, André, 75012 Paris (FR)
(74) Mandataire: Verdier, Louis
(86) Numéro de dépôt international: FR9501639
(87) Numéro de publication internationale: WO9619067

(56) Documents cités:
- WO-A-92/02097
- WO-A-92/08221
- AU-B- 587 697
- FR-A- 2 584 551
- GB-A- 2 180 122

## Description

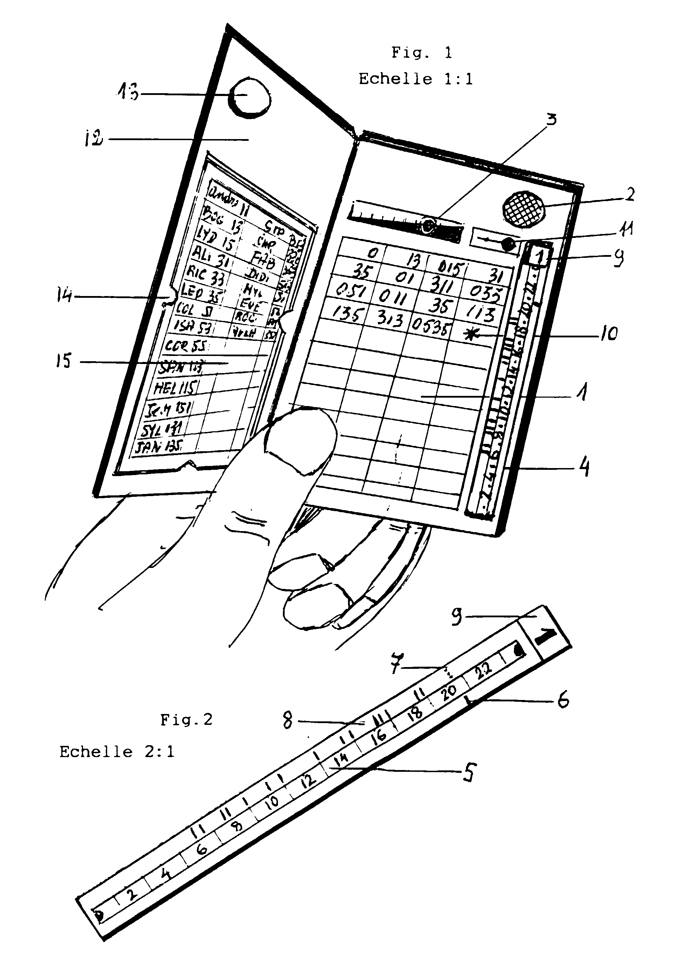

Cet appareil (fig. 1) de la grandeur d'une calculatrice de poche permet à partir de sonneries de téléphone, l'enregistrement de messages chiffrés sur un écran à cristaux liquides. Il est indépendant de toute source et alimenté par une pile lui conférant une autonomie d'une année. Un seul coup d'oeil sur l'écran (1 ) permet de reconnaître les auteurs des messages et dans une certaine mesure leur contenu. Il enregistre également l'heure des appels de la journée en cours.

L'EAST a un volet protecteur (4) avec une ouverture (5) sur le microphone à commande vocale incorporé (6). Un potentiomètre (9) permet de régler la sensibilité du micro. Le volet protecteur a un emplacement (7) dans lequel on glisse une feuille cartonnée avec les noms et numéros de code personnel de chacun (8). Chaque sonnerie agit par l'intermédiaire du microphone sur le microprocesseur, le décodeur et sur le système de mise en place des chiffres dans le quadrillage de l'écran (1) ainsi le message 3.135 est transmis vers le destinataire par quatre appels successifs, chacun porteur d'un seul chiffre, en un temps ne devant pas dépasser vingt secondes par appel.

Afin d'éviter les erreurs inhérentes à tous les télécoms du monde, du fait d'un manque de synchronisme entre les sonneries qu'entend dans l'écouteur celui qui appelle et le nombre de sonneries à la réception, le microprocesseur a été programmé de sorte qu'il ne prenne pas en compte toutes les sonneries, mais dans les couples de sonneries, ne retienne que les impairs, ainsi au premier appel pour envoyer le chiffre 3, on laisse sonner trois fois. A la réception, la première sonnerie met en attente le 1, la deuxième sonnerie n'appelle pas de réaction, la troisième met 3 en attente, s'il y a une quatrième sonnerie, elle n'est pas prise en compte et après quatre secondes de silence, c'est le 3 qui est visualisé. Le 1 ne pose pas de problème même s'il y a eu 2 sonneries, c'est 1 qui est visualisé. Pour le 5, c'est pareil. Une telle opération classique est régie par un diagramme approprié.

Le message 3135 est justement interprété même si à la réception, le microphone a entendu 4246, 3145 ou 4236. L'ingéniosité en matière de messages chiffrés ne connaît pas de limite, l'important est que ces messages soient transmis sans erreur.

Afin d'indiquer l'heure des appels de la journée, une montre digitale linéaire est intégrée au système électronique de l'appareil (10). L'heure actuelle est indiquée (3) par un curseur digital se déplaçant le long du cadran de 24 heures. Ce curseur, à la première sonnerie d'un nouveau message laisse une marque visible (11) et ensuite ne réagit plus pendant 80 secondes à d'autres sonneries. Il y a ainsi autant d'empreintes horaires que de cases occupées par les messages et dans le même ordre, le rapprochement entre les deux est évident pour l'utilisateur.

La lecture des messages de la journée indique quinze appels, il est 20h30. Le septième appel (14) le 311 est d'Alice dont le code est 31, elle a appelé à 10h30 et demande de la "rappeler d'urgence" ; tout double chiffre à la fin d'un message a cette signification. L'indice 1 (12) signale la première journée d'enregistrement, il est remplacé par un 2 à minuit et une étoile * (13) ou éventuellement une case vide signifie la fin des messages de la journée en cours. Les affichages horaires s'effacent à la première sonnerie du lendemain. A saturation de l'écran, les appels de la première journée sont effacés au fur et à mesure.

L'EAST ne se pose pas en concurrent des répondeurs enregistreurs existants ou futurs, il est à côté, un peu comme la carte postale classique par rapport à une longue lettre. Grâce à sa petite taille, son entière autonomie, sa fiabilité, son esthétisme car il possède deux surfaces à décorer, il peut devenir le compagnon fidèle de chaque appareil téléphonique moderne. Son faible prix à l'achat, son exploitation peu coûteuse favorise son expansion dans tous les pays riches ou pauvres.

## Revendications

1. Dispositif électronique autonome permettant de visualiser sur un écran à cristaux liquides (6) des messages chiffrés à partir de sonneries de téléphone, ce dispositif comprenant un microphone (2) percevant les sonneries, un microprocesseur et un décodeur traduisant les sonneries en chiffre correspondant, dispositif étant caractérisé en ce qu'il comprend une montre digitale intégrée au système électronique, indiquant l'heure actuelle et l'horaire des messages enregistrés.

2. Dispositif selon la revendication 1 caractérisé en ce que à chaque appel téléphonique, un chiffre parmi les quatre retenus 1 3 5 et 0 est visualisé, chaque appel devant être opéré à l'intérieur d'un temps de vingt secondes, en ce qu'un logiciel a programmé le microprocesseur de telle sorte qu'une sonnerie ou deux permettent l'affichage du chiffre impair 1, trois ou quatre sonneries donnent 3, cinq ou six sonneries 5 et plus de six sonneries affichent 0. Les chiffres composant un message se retrouvent l'un après l'autre dans une case du quadrillage à l'emplacement des unités, les chiffres déjà présents se déplaçant vers la gauche.

3. Dispositif selon la revendication 1 caractérisé en ce que l'enregistreur est réalisé sous la forme de deux volets repliables, le volet protecteur (4) ayant un ajour (5) permettant l'accès des sonneries au microphone (6) un potentiomètre réglant la sensibilité du micro (9) et un emplacement (7) maintenant une feuille de papier cartonné avec la liste des personnes susceptibles d'émettre et de recevoir des messages ainsi que le numéro de code qui leur est attribué.

4. Dispositif selon la revendication 1 caractérisé en ce qu'une montre digitale et linéaire (10) est intégrée au système électronique indiquant l'heure grâce à un curseur digital qui se déplace le long d'un cadran linéaire (3) et qui laisse une marque (11) visible à l'endroit correspondant à l'heure de la première sonnerie d'un nouveau message, puis reste insensible aux autres sonneries pendant les quatre-vingts secondes qui suivent. Le nombre de marques visibles correspond au nombre de messages enregistrés.

5. Dispositif selon la revendication 3 caractérisé en ce que lorsque l'écran arrive à saturation, les appels de la première journée sont effacés au fur et à mesure.

## Patentansprüche

1. Autonome, elektronische Vorrichtung zur Sichtung kodierter Nachrichten auf einem Flüssigkkristall-Display (6), ausgehend von Telefonklingelzeichen; die Vorrichtung besitzt ein Mikrofon (2) zur Wahrnehmung der Klingelzeichen, einen Mikroprozessor und einen Dekodierer zur Umwandlung der Klingelzeichen in entsprechende Ziffern; die Vorrichtung ist dadurch gekennzeichnet, dass sie eine in das elektronische System integrierte digitale Uhr besitzt, die die aktuelle Stunde und die Stunde der aufgenommenen Nachrichten anzeigt.

2. Die Vorrichtung laut Patentanspruch 1 ist dadurch gekennzeichnet, dass bei jedem Telefonanruf eine unter den vier Ziffern 1 3 5 und 0 gesichtet wird, wobei jeder Anruf maximal 20 Sekunden beansprucht; ferner dadurch gekennzeichnet, dass der Mikroprozessor dergestalt programmiert wurde, dass ein oder zwei Klingelzeichen die Anzeige der ungeraden Zahl 1 ergibt, drei oder vier Klingelzeichen die 3 ergeben, fünf oder mehr als sechs Klingelzeichen 0 anzeigen. Die eine Nachricht bildenden Ziffern befinden sich gereiht in einem Kästchen des Rasters an der Stelle der Einheiten; die bereits präsenten Ziffern rücken nach links.

3. Die Vorrichtung laut Patentanspruch 1 ist dadurch gekennzeichnet, dass das Aufnahmegerät in der Form von zwei beweglichen Klappen realisiert ist, die Schutzklappe (4) hat einen Durchbruch (5) für den Zugang der Klingelzeichen zum Mikrofon (6), einen Potentiometer (9) zur Einstellung der Sensibilität des Mikrofons und einen Schlitz (7), in dem das kartonierte Papierblatt mit der Namensliste der Personen steckt, die Nachrichten senden oder empfangen, sowie die jeder Person zugeteilten Codenummern.

4. Die Vorrichtung laut Patentanspruch 1 ist dadurch gekennzeichnet, dass eine lineare digitale Uhr (10) in das elektronische System integriert ist, die die Stunde anzeigt mit Hilfe eines digitalen Cursors, der sich auf einem linearen Zifferblatt (3) bewegt und eine sichtbare Markierung (11) an der Stelle hinterläßt, die der Stunde des ersten Klingelzeichen einer neuen Nachricht entspricht und die dann in den folgenden achtzig Sekunden auf keine weiteren Anrufe reagiert. Die Anzahl der sichtbaren Markierungen entspricht der Anzahl der aufgenommenen Nachrichten.

5. Die Vorrichtung laut Patentanspruch 3 ist dadurch gekennzeichnet, dass die Anrufe des ersten Tages, wenn das Display saturiert ist, schrittweise gelöscht werden.

## Claims

1. Self-powered autonomous electronic device with a liquid crystal display (6) on which one may visualize numerical messages generated by telephone rings. This device is comprised of a microphone (2) tuned to pick up rings, a microprocessor and a decoder which converts the rings into the corresponding digits. A digital clock indicating current time and the time of each message is incorporated into the electronic system.

2. Device as per claim number 1, which at each incoming call displays one digit from among the following four: 1, 3, 5 and 0. Calls must not exceed 20 seconds each. The microprocessor has been programmed with software so that one or two rings cause it to display the odd number 1, three or four rings the number 3, five or six rings the number 5, and more than six rings displaying a 0. These numbers make up a message in that they are lined up sequentially in the display grid's single-digit space, the digits already there moving over to the left.

3. Device as per claim number 1, characterized by the fact that the recorder has two folding panels, the protective panel (4) having an opening (5) so that the microphone can pick up the sound of the ringing (6), with a potentiometer regulating the microphone's sensitivity (9) and a space (7) meant for a card with a list of people likely to send or to receive messages, and the code number each of them as it has been assigned.

4. Device as per claim number 1, characterized by a digital, linear dock (10) integrated into the electronic system and indicating the time with a digital cursor that moves along a linear dial (3) and which leaves a visible mark (11) at the location corresponding to the time of the first ring of a new message. It does not react to further rings during the following 80 seconds. The number of visible marks corresponds to the number of messages recorded.

5. Device as per claim number 3, characterized by the fact that when the screen is full, calls from the first day are erased one by one, as new calls come in.
